# EUROPEAN PATENT APPLICATION

(11) **EP 1 117 050 A1**
(43) Date of publication of application: **18.07.2001**
(21) Application number: 00100740.0
(22) Date of filing: 14.01.2000
(51) Int. Cl.: G06F 17/30

(54) **Individual data representation**

(71) Applicant: Sun Microsystems, Inc., Palo Alto, California 94303-4900 (US)
(72) Inventor: Hofmann, Ralf, 22143 Hamburg (DE); Schulz, Torsten, 25421 Pinneberg (DE); Eilers, Bernd, 21107 Hamburg (DE); Pfohe, Thomas, 22143 Hamburg (DE)
(74) Representative: Frank, Veit Peter, Dipl.-Ing.

(57) **Abstract**

A method for presenting data on a user device with presentation requirements relating to the presentation of said data on said user device, comprising the following steps:
a) receiving a request from said user device for said data by data presentation management means,
b) identifying said presentation requirements of said user device to said data presentation management means, and
c) selecting a presentation scheme for said data in accordance with said presentation requirements, so that said presentation scheme can be applied to said data to create presentable data to allow the presentation of said data on said user device.

## Description

The present invention relates to a method and a system for the individual representation of data.

Information requested by a user device naturally needs to be in a format to be understood by this specific user device. Therefore, in many instances information is only accessible to a certain group of user devices. For example, homepages of individuals or companies provided by a webserver over the internet are generally available only to specific user devices, namely computer systems supporting the regular homepage data format html. However, the access of other user devices to this information may also be desirable. Such user devices may be, for example, handheld computers or mobile phones.

Therefore, the object of the present invention is to provide a method and a system allowing the access of data, particularly over a network, to a variety of different user devices, including mobile phones and handheld computers.

This object is achieved by the inventive method for presenting data on a user device with presentation requirements relating to the presentation of this data on the user device, comprising the following steps:
a) receiving a request from the user device for the data by data presentation management means,
b) identifying the presentation requirements of the user device to the data presentation management means,
c) selecting a presentation scheme for the data in accordance with the presentation requirements, so that the presentation scheme can be applied to the data to create presentable data to allow the presentation of the data on the user device.

Herein, the step c) may be carried out by the data presentation management means. The inventive method may also comprise the step d) of applying the presentation scheme to the data to create presentable data to allow the presentation of the data on the user device. This step d) may be carried out by the data presentation management means. However, step d) may also be carried out by the user device or by any other device which applies the presentation scheme and provides the presentable data to the user device.

The aforementioned method may be supplemented by the further step e) of transmitting the presentable data to the user device to allow the presentation of the data on the user device.

The data may be retrieved by the data presentation management means before the application of the selected presentation scheme to the data. In another embodiment of the present invention the data may be retrieved by the user device itself. Then, the selected presentation scheme may be applied by the user device or by the presentation management means. The latter would, for example, apply, if the data retrieved by the user device would be transferred to the presentation management means for applying the selected presentation scheme and than be retransferred to the user device.

In the scope of the present invention a method is also provided for obtaining data by a user device having presentation requirements relating to the presentation of the data on the user device, comprising the following steps:
a) submitting a request by the user device to data presentation management means for obtaining the data from the data presentation management means, the request causing the identification of the presentation requirements of the user device to the data presentation management means, the selection of a presentation scheme for the data in accordance with the presentation requirements of the user device by the data presentation management means, the request further causing the application of the selected presentation scheme to the data to create presentable data, and
b) receiving in the user device the presentable data to allow the presentation of the data by the user device.

Furthermore, a method is provided for obtaining data by a user device having presentation requirements relating to the presentation of the data on the user device, comprising the following steps:
a) submitting a request by the user device to data presentation management means for obtaining the data from the data presentation management means, the request causing the identification of the presentation requirements of the user device to the data presentation management means and the selection of a presentation scheme for the data in accordance with the presentation requirements of the user device by the data presentation management means,
b) receiving in the user device the selected presentation scheme for the data,
c) applying in the user device the selected presentation scheme on the data to create presentable data.

Herein, the user device may receive the data via data management presentation means, as described earlier.

Data in the scope of the present invention is the representation of information. This information can be presented by any suitable means, for example, text, picture, sound, movie or action. Different kinds of information can also be combined. This data may be accessible to the user device, for example, via a network. For the retrieving of the data certain requirements of the user device have to be considered. Such requirements may be of different type. They include presentation requirements. They may further have different origin. For example, the requirements may be caused by the software on the user device, which may support only specific kinds of information. It may also be possible that the requirements depend of the hardware of the user device, if the user device can, for example, present information merely via a loudspeaker. User depending requirements are also possible in the scope of the present invention. This may be caused by certain preferences of the user as well as by a handicap.

In the scope of the present invention data includes also functions. Such functions may be, for example, actions for presenting data, for example, movies and sound as well as function for processing on data like, for example, calculation functions or spellchecker.

A user device according to the present invention may be, for example, a computer system comprising at least a processor, a storage medium and an i-/o-interface. Via this i-/o-interface the user device may be connected to the source of the data. It will also be possible that the requested data is stored on the storage medium of the user device. Regularly, the user device comprises also input and output devices connected via the i-/o-interface.

The requested data may be retrieved via at least one portlet. In the context of the present invention a portlet is understood to be means for providing the requested data from a data source, for example, from a certain homepage or data base.
Two or more portlets may be arranged in tree-like organization. This tree-like organization may be presented to a user of the user device, for example, on a screen of the user device, so that this user has the possibility to easily choose among the offered portlets.

The presentation requirements of the user device may be determined based on information about the user device. For example, if the data presentation management means are informed about the type of the user device they may conclude therefrom the presentation requirements of the user device.

In the context of the present invention data presentation management means are hardware or - generally - software means for managing the presentation of data on a user device. Their exact functionality depends on the implementation of the present invention. The functionality of the data presentation management means includes at least the selection of the presentation scheme for the requested data in accordance with the presentation requirements of the user device. For this purpose the data presentation management means must be informed about the presentation requirements of the user device. Furthermore, the functionalities of the data presentation management means may include the application of the selected presentation scheme on the requested data in order to create presentable data to be presented by the user device. This requires the availability of the requested data for the data presentation management means. The retrieval of this data may also be carried out by the data presentation management means.

The presentation schemes may be defined, for example, in an extensible stylesheet language (XSL). XSL is a language for creating a stylesheet which describes how content being formatted in an extensible markup language (XML) will be presented to a user device. The presentation scheme may describe, for example, if a certain content defined in XML will be displayed, where this content will be displayed and how it will be displayed.

The methods of the present invention may be implemented in a computer program (computer program product), including comprehensive office applications. A computer program product comprises a medium configured to store or transport computer readable code, or in which computer readable code may be embedded. Some examples of computer program products are: CD-ROM disks, ROM-cards, floppy disks, magnetic tapes, computer hard drives, servers on a network and carrier waves and digital signals transmitted over a telecommunication link or network connection.

Such a computer program may be stored on any common data carrier like, for example, a floppy disk or a compact disk (CD), as well as on any common computer system's storage facilities, like hard disks. Therefore, the present invention also relates to a data carrier for storing a computer program for carrying out the inventive methods. The present invention also relates to a method for using a standard computer system for carrying out the present inventive methods.

In the scope of the present invention a computer system is provided comprising at least a processor, a memory and an i-/o-interface for representing data depending on presentation requirements of a user device relating to the presentation of the data on the user device, comprising data presentation management means, wherein the data presentation management means include:
a) at least one receiving module for receiving a request of the user device for the data,
b) at least one identifying module for identifying the presentation requirements of the user device, and
c) at least one selecting module for selecting a presentation scheme for the data in accordance with the presentation requirements.

Furthermore, the computer system may comprise
d) at least one retrieving module for retrieving the data, and
e) at least one applying module for applying the selected presentation scheme to the data to create presentable data which may be presented by the user device.

The retrieving and the applying functions may also be carried out in a user device or in a computer system being accessible to the user device. Therefore, the retrieving module and the applying module may also be located in the user device or in any computer system which is connectable or conntected to the user device and which is able to deliver the result of the application of the presentation scheme, the presentable data, to the user device.

The aforementioned computer system may be supplemented by a transmitting module e) for transmitting the presentable data to the user device to allow the presentation of the requested data on the user device.

The present invention will now be described exemplary along the following figures, which show:
- Fig. 1:: schematic representation of an example for the method and system of the present invention
- Fig. 2:: schematic representation of the screen print of a user device using the present invention
- Fig. 3:: flow chart showing obtaining the presentation requirements of a user device
- Fig. 4:: flow chart showing the steps to be carried out by a method according to the present invention
- Fig. 5:: flow chart showing the operation of a method of the present invention
- Fig. 6:: schematic representation of the portlet manager

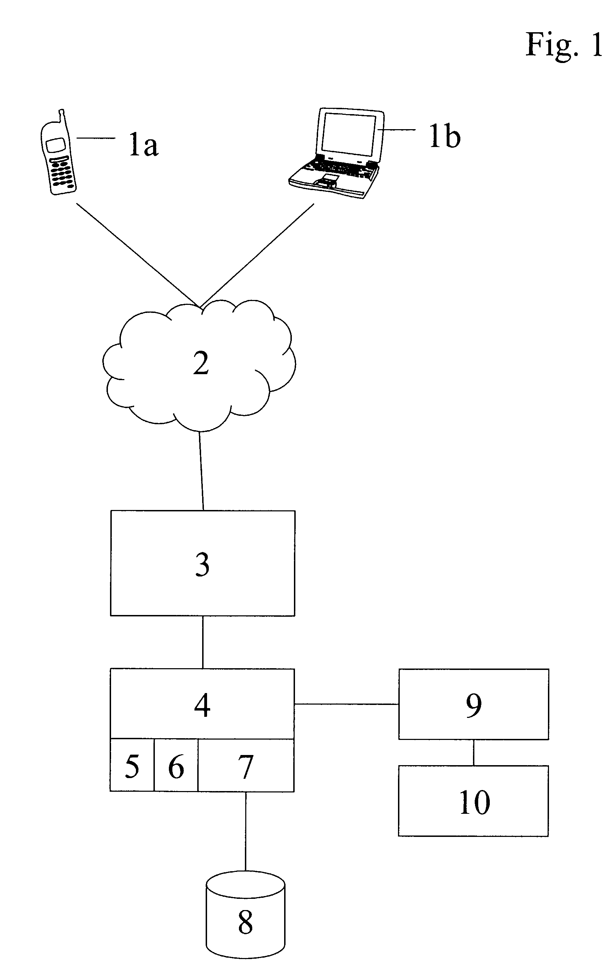

Fig. 1 shows an example of a system and method according to the present invention. A user device like a mobile phone 1a or a laptop computer 1b may want to access certain data via the network 2. This network 2 may be the Internet or any other permanent or temporary network, for example a local area network. Other user devices are suitable as well in the scope of the present invention. Examples include any kind of computer systems, like servers and personal computers, and any devices which are able to process data and to communicate with other devices for exchanging data. In this context computer systems may include at least a processor, a storage medium and an i-/o-interface. In the context of the present invention data refers to any type of information which is arranged in certain order to be accessible by a computer system. The data to be accessed may also include one or more functions or functionalities provided to the user of a user device. Functions are, in this context, possibilities given to the user device to initiate any actions beyond the mere retrieval or display of information, for example, a search in the internet for a certain publication or the initialization of a software program on a remote server carrying out some operations in response to the user device's request.

If the user device la or 1b wants to access certain data via the network 2, it will send a request for said data, for example, for a certain homepage, to a webserver 3. The webserver 3 comprises a processor, a memory and an i-/o-interface. In particular, the webserver 3 includes means for receiving this request. The request may specify the data requested from the mobile phone la or the laptop 1b by giving suitable address data as to where this data can be found, for example, the Internet address of a homepage (URL).

This request will be forwarded to data presentation management means, in the following exemplary referred to as portlet manager 4. This portlet manager 4 may be implemented in software within the webserver 3 or may be installed on a separate computer system which is connected or connectable to the webserver 3. Having received the request for data from the webserver 3 the portlet manager 4 identifies the presentation requirements of the user device having sent the request for the data with respect to the presentation of the data to this user device. For this purpose the user device has means for identifying these requirements. These presentation requirements may be any conditions or limitations for the presentation of data on the user device, for example, kind and size of display for data on the user device, type of programming language or data format supported by the user device, or any other presentation requirements of the user device, for example, of the processor or the memory. These presentation requirements may not only result from technical necessities, but also from an individual user's demands or wishes. The presentation requirements of the specific user device are identified by the respective means either by being provided the information about the presentation requirements directly from the user device, together with the request for the data or separately, or by being provided information about the type of the user device and by procuring the needed information about the presentation requirements of the so identified user device from a data base, which may or may not be an integral part of the portlet manager, and which connects information about the type of the user device with the desired information about the specific presentation requirements of the user device with respect to the presentation of the requested data.

In order for the data to comply with the identified requirements the portlet manager 4 loads all configuration information needed for presenting the requested data to the user device la or 1b, respectively. Configuration information is all information about the layout and the presentation of the requested data. It must correspond to the identified requirements. The totality of the configuration information needed to present data to a certain user device is referred to as a presentation scheme. This is selected according to the presentation requirements of a certain user device by the data presentation management means, i.e. the portlet manager 4. For this purpose, XSL-stylesheets, which may be stored in storage medium 5 may be selected according to the identified requirements by means 7 for presenting data in accordance with the identified presentation requirements of the user device 1a. These means 7 are generally implemented in software. They may, for example, have access to a further external storage medium 8 on which, for example, XSL-stylesheets may be stored. The configuration data loaded in response to the user device's request may be stored in a specific file until the data to which it shall be applied has been provided.

The portlet manager 4 now retrieves the requested data. The data is procured via the webserver 3 from portlets 9, 10, ... . Portlets 9, 10, ... represent ways for accessing the requested data. This data may have different format. For example, text based information may be provided in the HTML format as well as in the WML format. The portlets 9, 10, ... have means for accessing data, including software modules, to retrieve the requested data for the portlet manager 4 from any accessible location, including internet homepages, data bases and other storage media.

In the portlet manager 4 the means 7 will then apply the presentation scheme loaded from storage media 5, 6 and 8 to the data. This presentation scheme will be applied to the data. Herewith, the data which was requested by the user device 1a or 1b, respectively, is converted to presentable data which may be presented in accordance with the requirements of the user device 1a or 1b, respectively.

Finally, the data may be transferred to the user device 1a, 1b which requested it in the presentation required by this user device 1a, 1b. Herewith, the user device la, 1b may access the requested data in proper form.

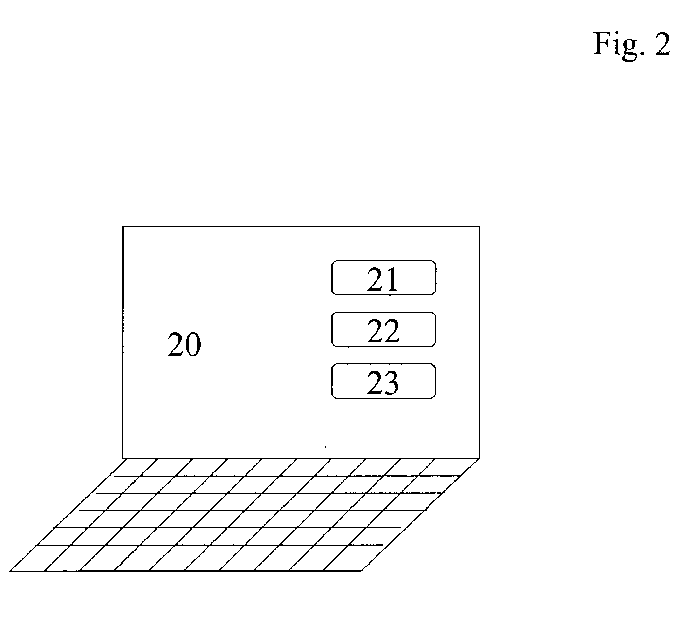

Fig. 2 gives an example of a user's view on the present invention by showing a print-out of a screen 20 of a user device, here a laptop, utilizing a method according to the present invention. Screen 20 shows symbols 21, 22, 23, ..., each standing for one portlet - 9, 10, ... in Fig. 1. The symbols 21, 22, 23, ... offered on the screen 20 and the portlets associated therewith can be freely chosen by a user of the user device.

However, a portlet is only selected for display on screen 20, that means the user can only choose it, if its data may be presented by the user device. For example, if the user device does not support graphics, a portlet which defines the MIME type image/jpeg will not be selected for display on the screen 20, that means it will not be offered to the user of the user device. This pre-selection of portlets to be offered to the user is made by a comparison of the requirements of the user device and of the MIME type of data defined by each of the portlets. In the above example relating to graphics the presentation requirements of the user device, the laptop, regarding the presentation of data will not allow to support graphics. The comparison with the MIME type of data defined by the various portlets will show that a portlet defining image/jpeg as its MIME type of data cannot be supported by this user device. Therefore, it will not be displayed on the screen 20. This comparison may be made at any suitable location, for example, in the user device as well as in the webserver, in the portlet manager or in the respective portlet itself.

Instead of the screen print-out given in Fig. 2 the portlets may also be offered to the user of the user device in the form of a text based listing. This listing may be put together in the portlet manager, for example, in the XML format. The information required for this listing, namely which portlet defines which mime type of data, may be retrieved via the webserver from the various portlets.

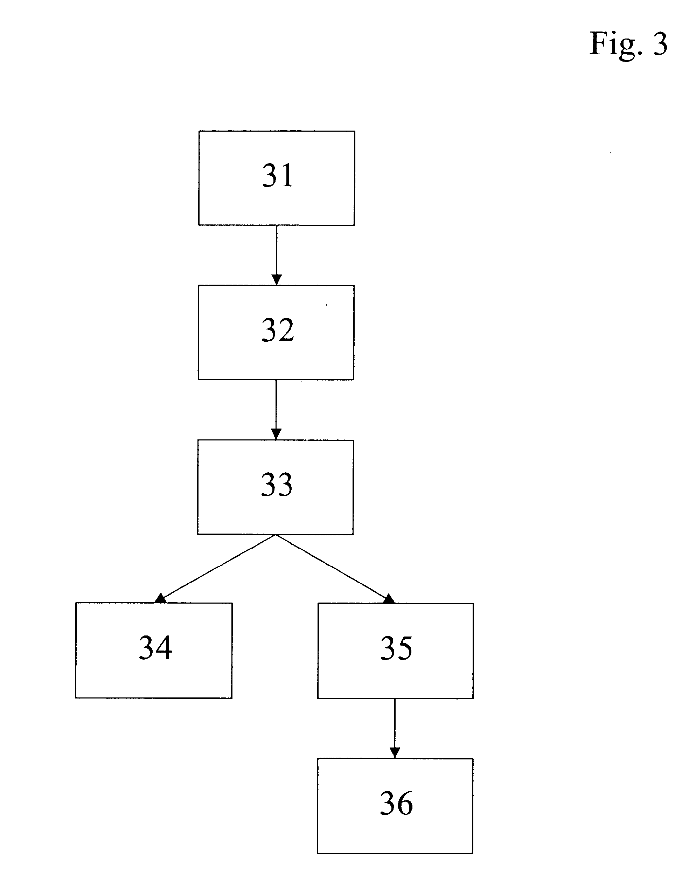

Fig. 3 shows in a flow chart one possible way to fulfill the presentation requirements of the user device 1a or 1b, respectively. In a first step 31 the user device 1a, 1b sends a request to the portlet manager 4 via the webserver 3. This request either contains information about the presentation requirements of the requesting user device 1a, 1b or it contains information about the identity of the user device 1a, 1b. It further includes a description of the requested data. Such a description may be, for example, the URL of the data, if the requested data can be found on a homepage on the Internet. The portlet manager 4 will contact in step 32 the corresponding portlet for retrieving this data. If the requested data is only available from several different portlets, those would be contacted in this step. In a next step 33 the portlet manager 4 retrieves the data from the one or more portlets. In order to consider the presentation requirements of the user device 1 the portlet manager 4 needs information about these requirements. In one embodiment of the present invention the portlet manager 4 extracts from the request in a further step 34 a list of MIME types supported by the user device 1a, 1b. In another embodiment the portlet manager 4 may have a list of the presentation requirements of different user devices 1a, 1b. In this case, the portlet manager 4 may analyze the identity of the user device 1a, 1b in step 35 and then contact this list in step 36 in order to obtain the information about the requirements of the user device 1a, 1b.

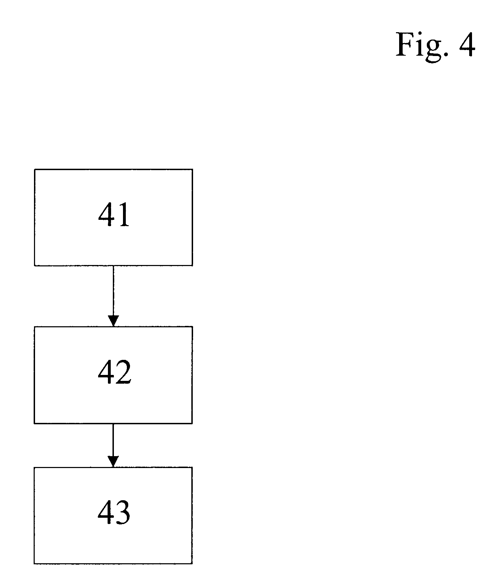

Fig. 4 shows a flow chart representing a method according to the present invention for presenting data on a user device with certain data presentation requirements. In a first step 41 the data presentation management means, i.e. the portlet manager 4 receives a request for data from a user device 1a, 1b. In the next step 42 the portlet manager 4 identifies from this request the presentation requirements of the user device 1a, 1b, as it was above described in relation to Fig. 3. In step 43 a presentation scheme is selected for the requested data in accordance with the identified presentation requirements. This enables the user device 1a, 1b or the portlet manager 4 or another computer system which is able to be connected to the user device 1a, 1b or to the portlet manager 4 to apply the selected presentation scheme to the data delivered by the portlets in order to arrive at presentable data which may be presented to the user device 1a, 1b.

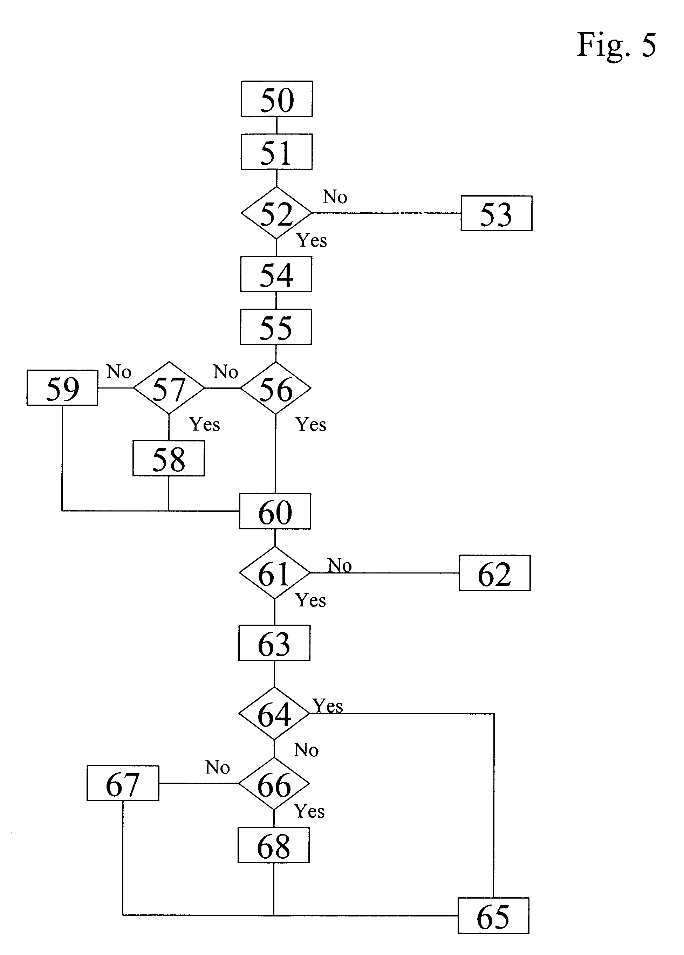

Fig. 5 presents an exemplary embodiment of the method of the present invention. In this example, a setup as presented in and described in connection with Fig. 1 is used. Therefore, reference numerals below 50 refer to devices shown in Fig. 1.

In step 50 the user device, for example, a mobile phone 1a sends a request for data via the network 2 to the webserver 3. The mobile phone 1a uses the wireless application protocol (WAP) as MIME type for data which it handles and processes. A browser may run on the mobile phone 1a. The requested data may be, in this example, a certain homepage which is available on the Internet at a certain URL. This homepage is programmed, for the purposes of this example, in an extensible markup language (XML). The request of the mobile phone 1a includes at least the URL of the requested homepage and the MIME type supported by the mobile phone 1a, i.e. WAP. In this example, the identity of the user device 1a, 1b and its user is transmitted together with or as a part of the request. The request also includes a command, for example, "channel", if the content of the requested URL shall be loaded onto the user device.

In step 51 this request of the mobile phone la is analyzed by the webserver 3 in order to decide whether this request has to be processed by the portlet manager 4. The alternative is to provide the data directly by the webserver 3. This decision - made in step 52 - is based on the MIME type used for the requested homepage and the MIME type supported by the mobile phone 1a.

If the above question would be answered with "NO", then the requested data will be directly provided by the webserver 3 to the mobile phone la in step 53. This would require that the MIME type of the requested data and the MIME type supported by the mobile phone 1a are identical or at least compatible. This condition will frequently be fulfilled, for example, if a browser - which is able to handle and process data in XML - requests a homepage - which is also formated in XML.

If the answer to the above question is "YES", the request is forwarded by the webserver 3 to the portlet manager 4 in step 54. The portlet manager 4 may be a servlet. A servlet is an extension to a webserver which provides the webserver with information and logic. If a request for a certain URL, for example, is forwarded to the portlet manager 4, the portlet manager 4 is started. This leads to the portlet manager 4 processing the request. This processing includes doPost requests as well as doGet requests as it is shown in Table 1. In order to simplify the further communication the portlet manager 4 employs the URL mentioned in the request forwarded by the webserver 3 for identifying itself and saves this address in a string. The portlet manager 4 identifies also the requested command. In one embodiment of the present invention there are supported at least the following commands. The "load" command loads information about the requested data. With the "save" command the user device submits settings made by the user device 1a in order to save these settings along with the user data. In order to provide the content of a portlet to a user device the "channel" command is submitted. Since the user device 1a requests in this example data from a portlet the "channel" command will be submitted by the mobile phone 1a. The functionality of the portlet manager 4, especially certain commands, is described in detail in the code shown in Table 1.

In step 55 the identity of the user device 1a and of the user employing the user device 1a is retrieved from the request. Then, in step 56, the portlet manager 4 will access an internal or external storage medium, for example, data base 8 in order to check whether for the identified user device 1a and for the identified user a presentation scheme or parts of a presentation scheme are already stored. For example, a certain user may request a specific character type (font) for the data to be presented on the display of his mobile phone 1a, or a certain mobile phone 1a may request a specific character size (font size) in view of its specific display.

If "NO", that means the storage medium does not have any information about a presentation scheme or a part of a presentation scheme assigned to the specific user or the specific requesting user device 1a, the portlet manager 4 may search in step 57 in the network 2 for such individual presentation schemes or parts thereof. For example, if the network 2 is the Internet the portlet manager 4 may contact the homepage of the producer or distributor of the mobile phone 1a in order to find the desired information there. If the search of the portlet manager 4 is successful, the presentation scheme or part of a presentation scheme will be retrieved in step 58. If the search is not successful, a default presentation scheme will be provided for later application to the requested data in step 59.

If "YES", that means the storage medium has information about a presentation scheme or a part of a presentation scheme assigned to the specific user or the specific requesting user device 1a, the portlet manager 4 loads this presentation scheme or part thereof in step 60.

In step 61, based on the presentation scheme or part thereof retrieved and based on the request of the user device 1a the portlet manager 4 requests from one or more portlets 9, 10, ... the delivery of the requested data, here the homepage with the URL specified in the request of the user device 1a. This request includes a list of all MIME types which are either supported by the user device 1a or which may be converted by the portlet manager 4 into a MIME type which is supported by the user device 1a. Other additional information like, for example, the type of the browser used by the user device 1a may also be included in the request to the portlet. In step 61 the portlet manager 4 asks the portlets 9, 10 ... whether they are able to deliver the requested data in a MIME type listed in the request. In order to submit the request it may be necessary to create a connection to the portlet.
If "NO", that means if the data cannot be delivered by the portlets 9, 10, ... in a MIME type which is supported by the user device 1a or which can be converted by the portlet manager 4 into a MIME type supported by the user device 1a, an error message is created in step 62, which is sent to the mobile phone 1a in order to report that the request for data sent in step 50 to the webserver 3 cannot be fulfilled.

If "YES", that means if the data can be delivered by the portlets 9, 10, ... in a MIME type which is supported by the user device 1a or which can be converted by the portlet manager 4 into a MIME type supported by the user device 1a, the data are received by the portlet manager 4 in step 63. In step 64 the MIME type of the received data is analyzed as to whether the user device 1a supports it or conversion by the portlet manager 4 is necessary.

If no conversion is necessary, the requested data are transferred to the user device 1a directly via the webserver 3 and the network 2 in step 65. If, however, conversion is required, what will be the case in our example where the homepage is in XML and the mobile phone 1a supports only WAP, the retrieved data will be analyzed in step 66 as to whether it is present in an extended markup language (XML).

If "NO", that means if the requested data is not in XML, the data will be converted in step 67 into the requested MIME type to arrive at presentable data by applying the corresponding presentation scheme, which includes conversion modules for the conversion of data between the respective MIME types. If, for example, the requested data would be supplied in HTML, this data would be converted from HTML to WAP in step 67. Subsequently, the created presentable data is sent to the user device 1a in step 65.

If "YES", that means the data is in XML - like in the here chosen example - the portlet manager 4 will select the suitable presentation scheme. For XML data this presentation scheme may include a XSL stylesheet. If a user device specific presentation scheme is accessible, the portlet manager 4 will choose this.

The requested data will then be subjected in step 68 to the application of the presentation scheme, in this example, to the selected XSL stylesheet. The presentation scheme may be retrieved by portlet manager 4 from storage medium 5. Herewith, the presentation scheme - here: the XSL stylesheet - is applied to the data so that presentable data is created. This presentable data may be sent to the user device 1a in step 65.

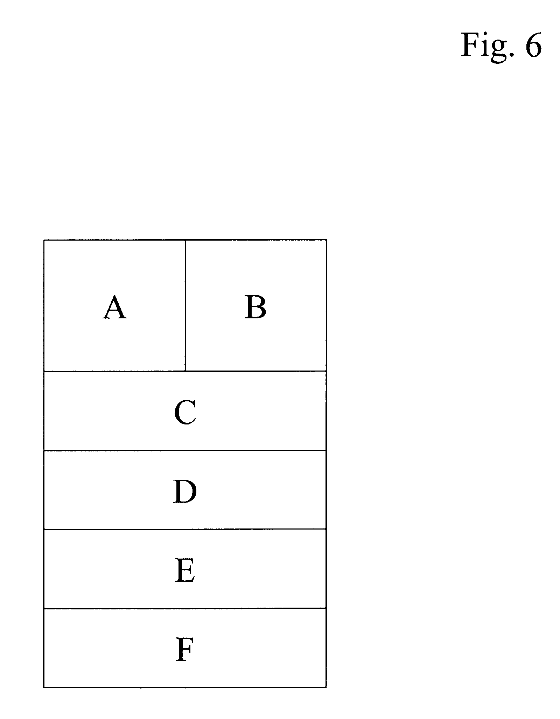

Fig. 6 shows an example of a portlet manager 4 according to the present invention. The portlet manager 4 comprises in this example six modules. Module A is a receiving module for receiving a request of the user device 1a, 1b. Module B is an identifying module for identifying the presentation requirements of the user device 1a, 1b. These two modules are able to communicate with the selecting module C in order to enable module C to select a presentation scheme for the requested data in accordance with the presentation requirements of the user device 1a, 1b.

In the present example, the portlet manager 4 comprises also a retrieving module D for retrieving the requested data to the portlet manager 4. The applying module E will then apply the presentation scheme selected in module C to the data to create presentable data which may be presented by the user device. This presentable data will be submitted by a transmitting module E to the user device. The modules D, E and F need not be part of the portlet manager 4. They or some of them may also reside on the user device 1a, 1b or on a computer system connected to the user device 1a, 1b or to the portlet manager 4.

It will be understood that the present invention is not limited to the examples given and explained in detail.

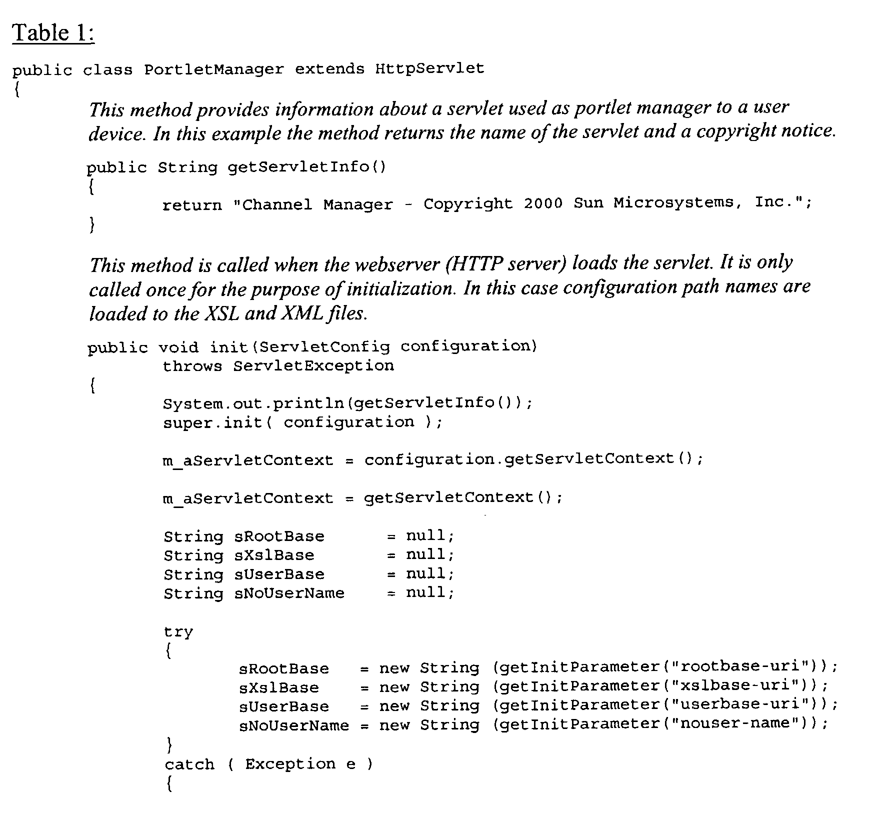

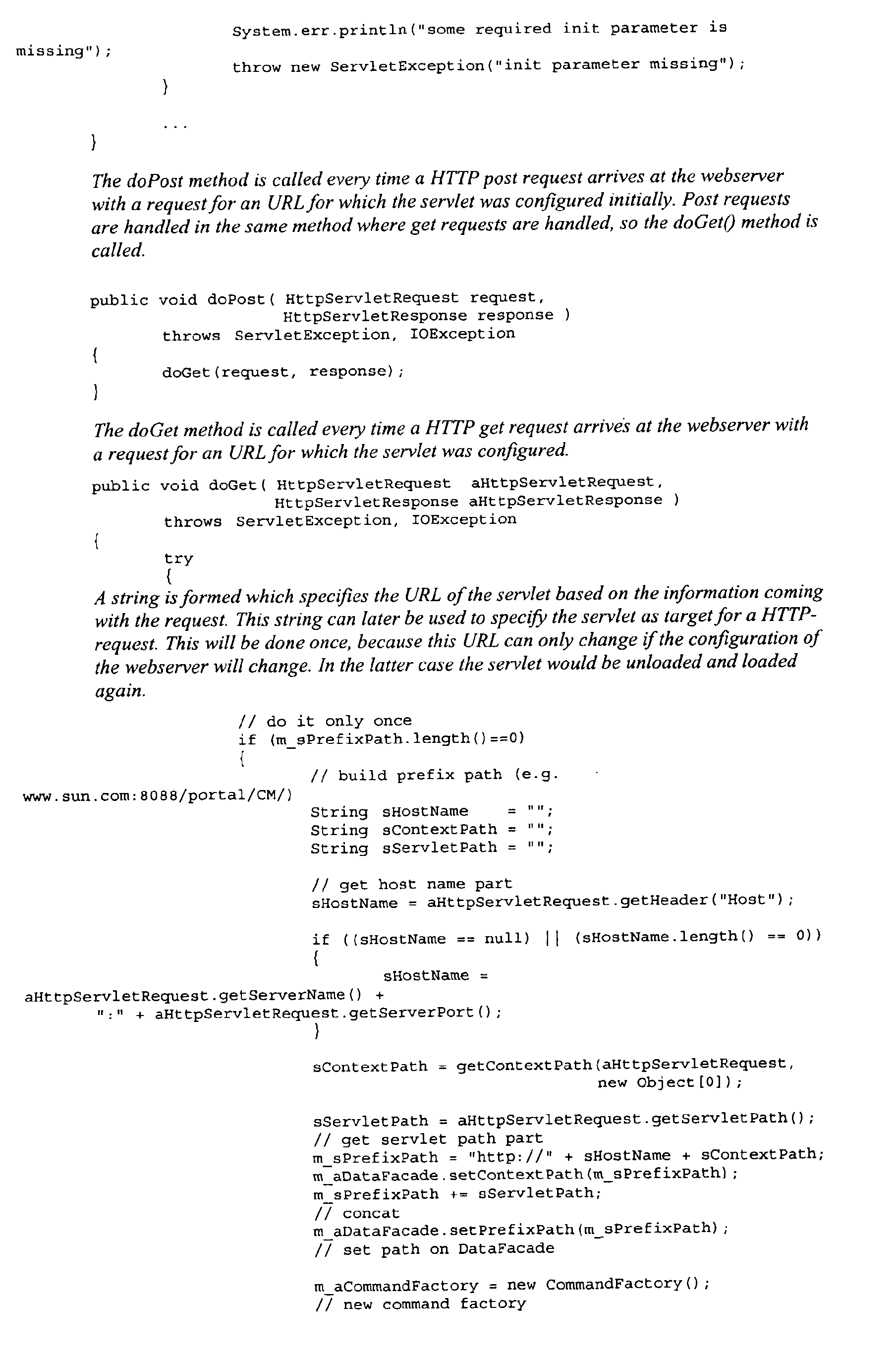

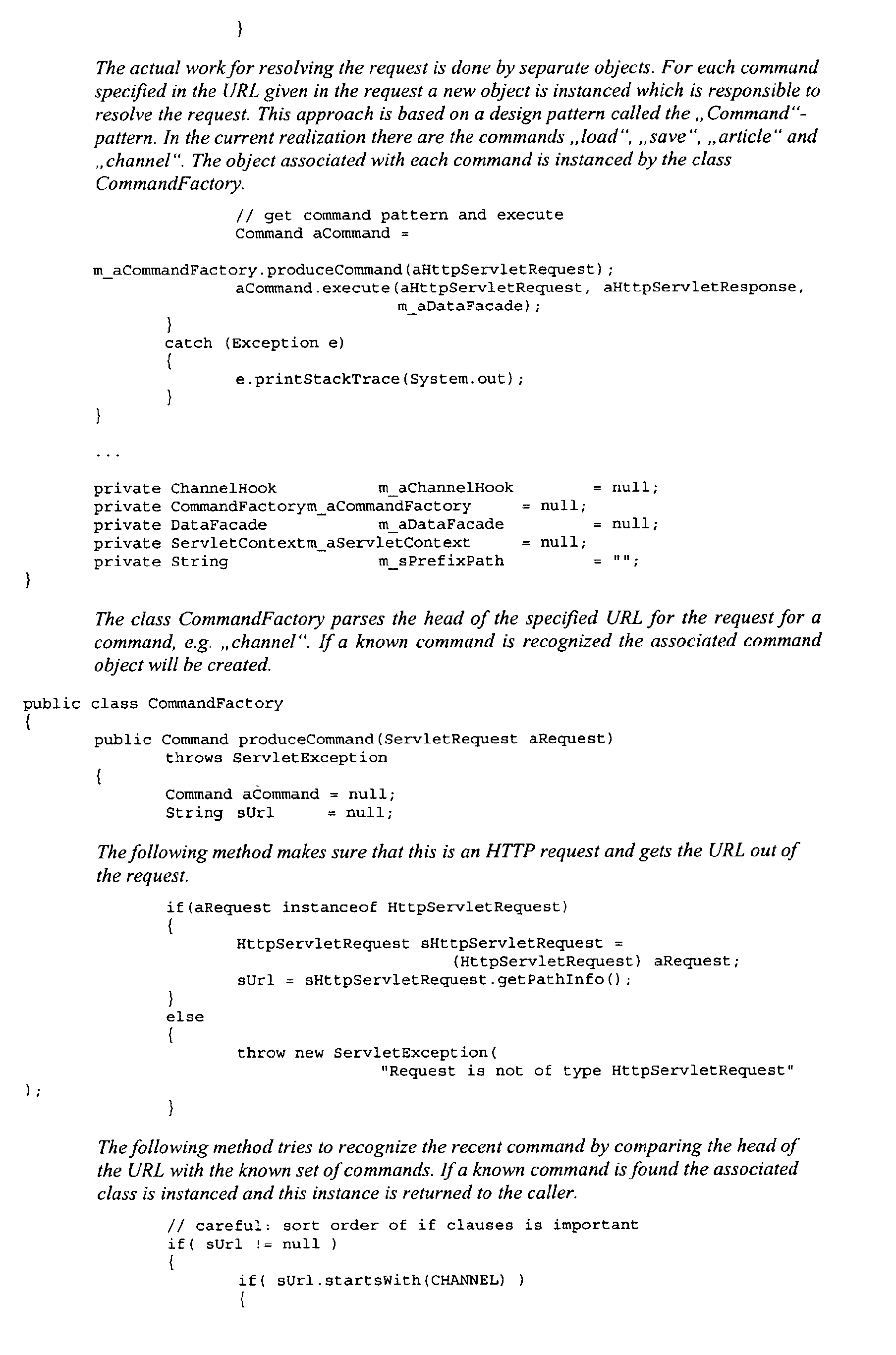

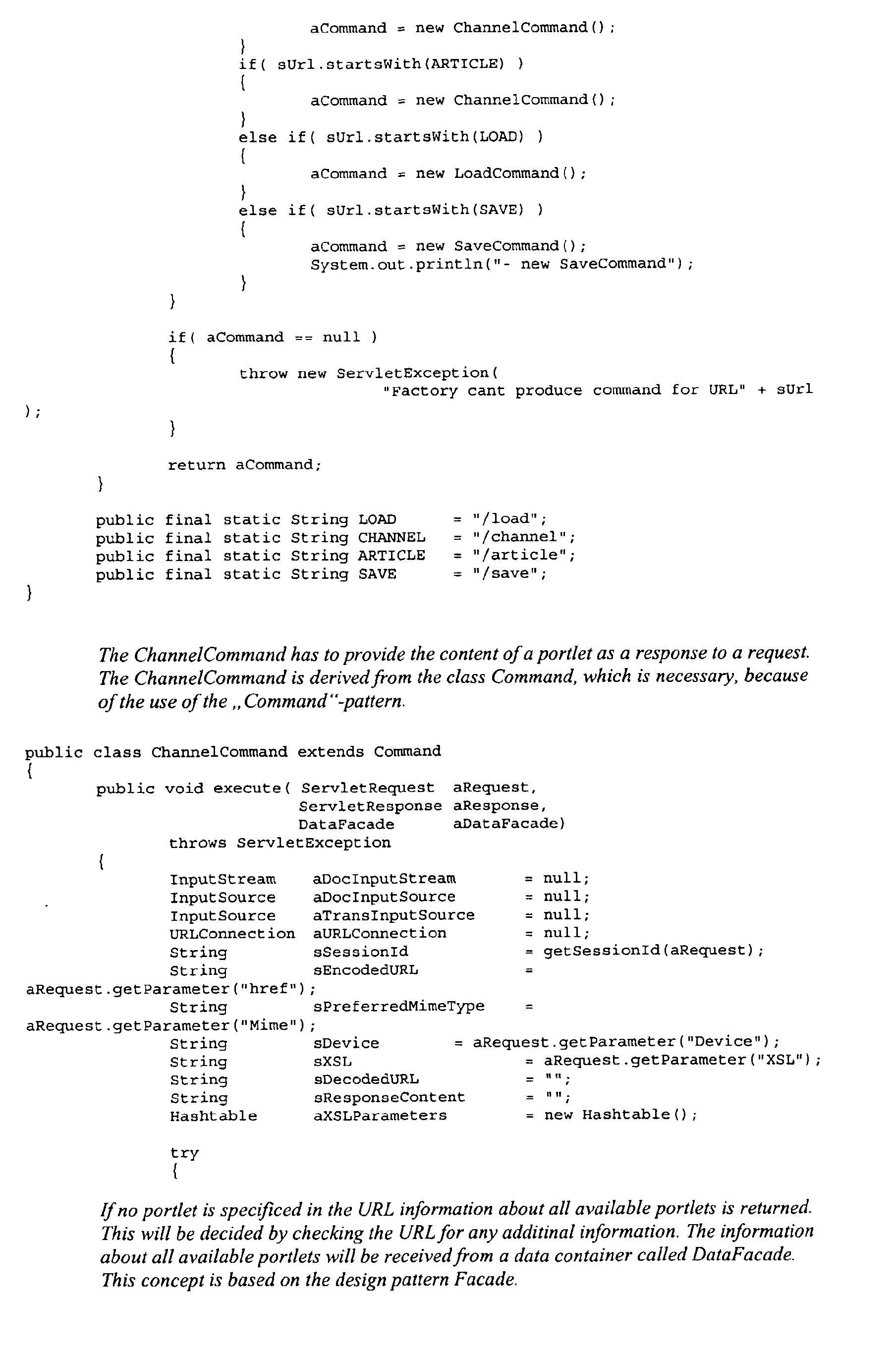

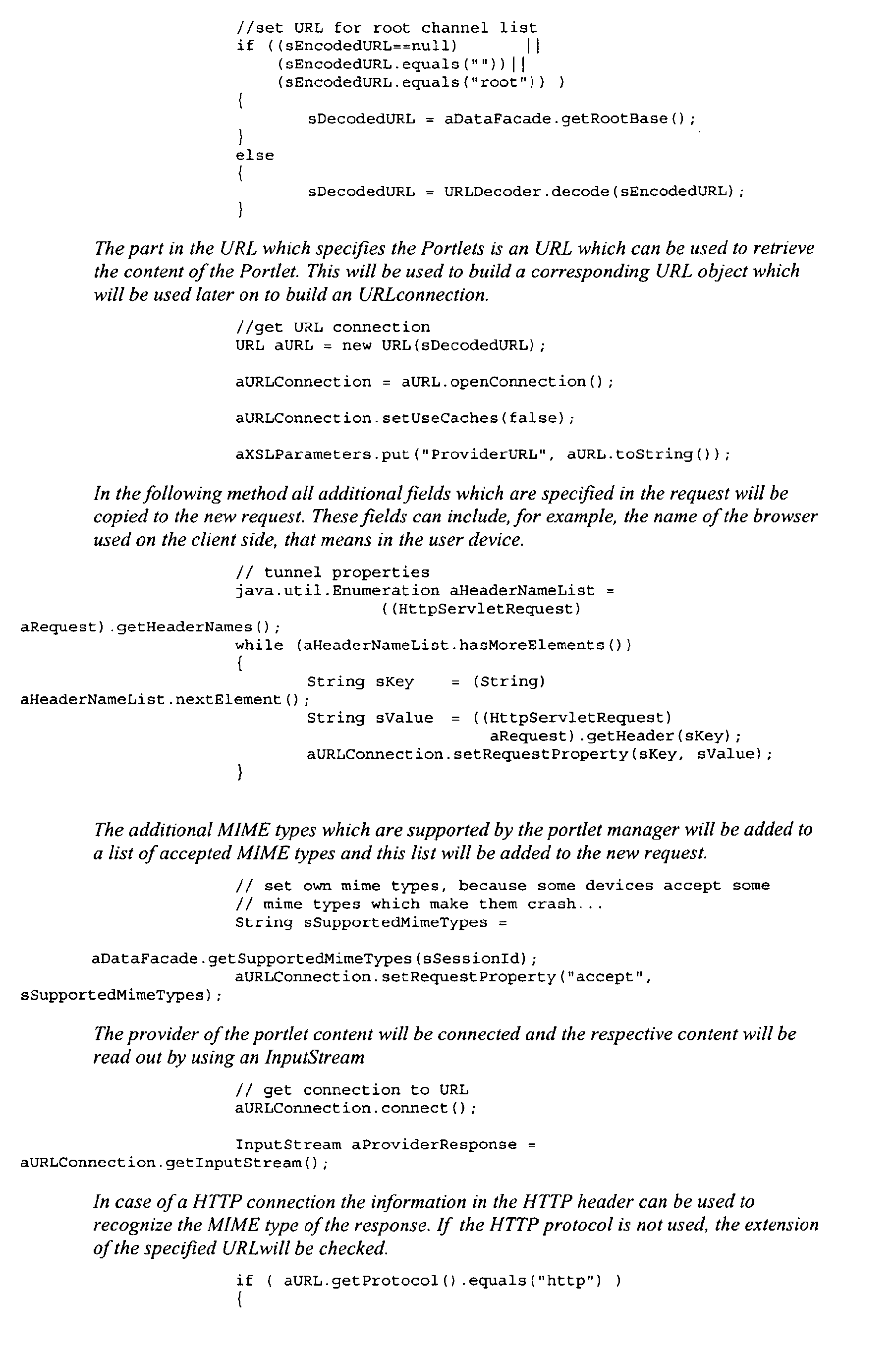

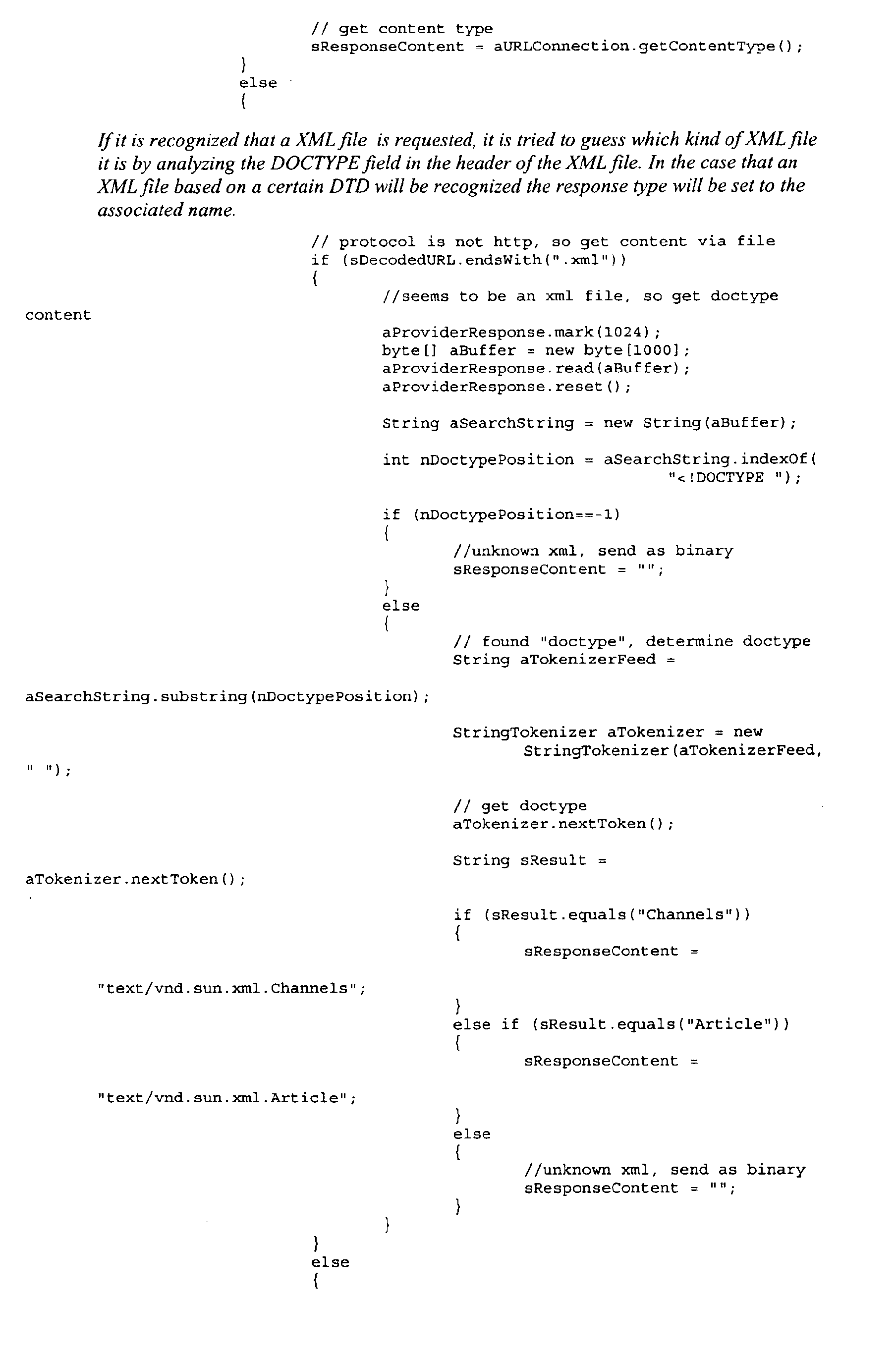

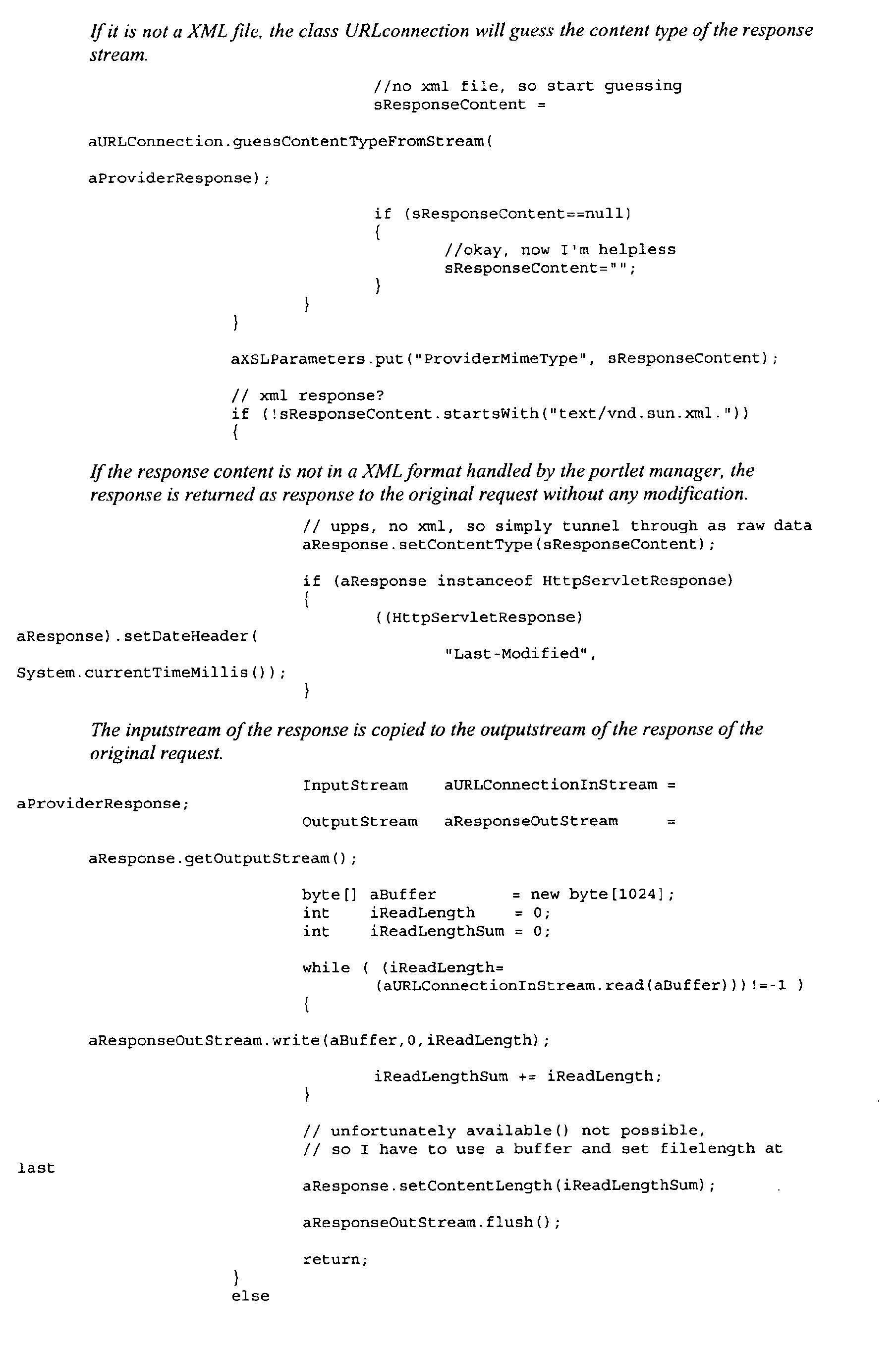

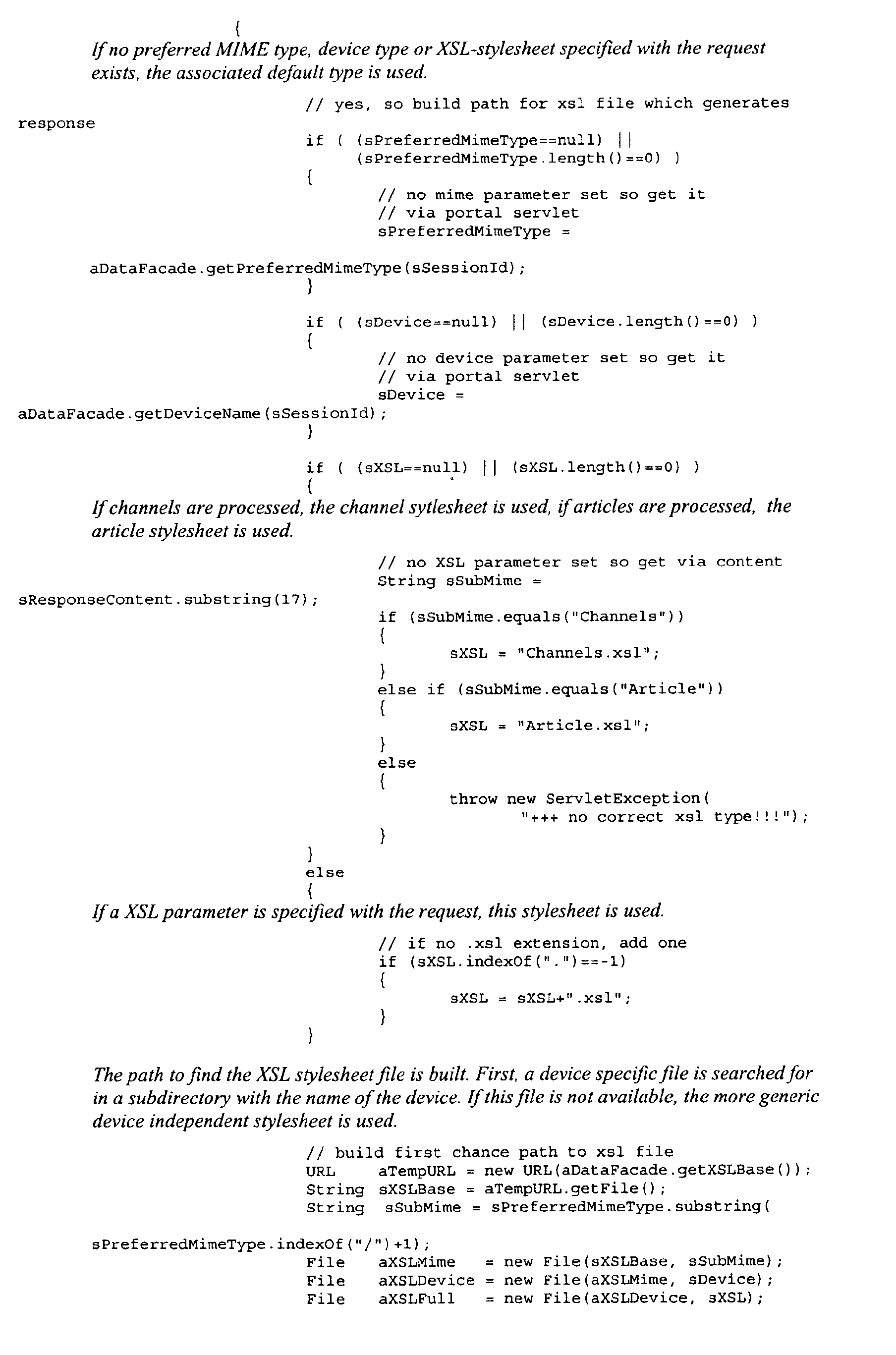

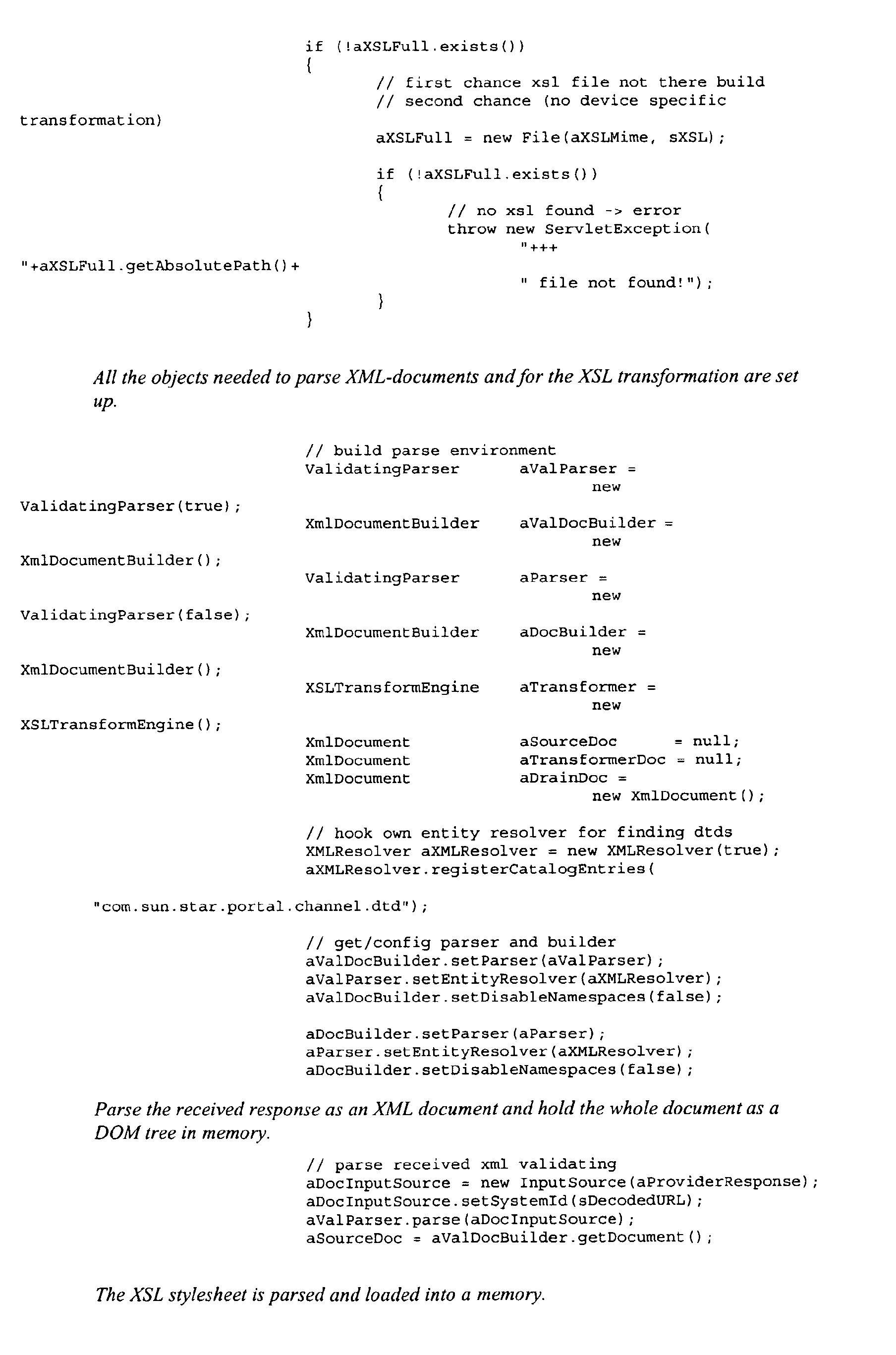

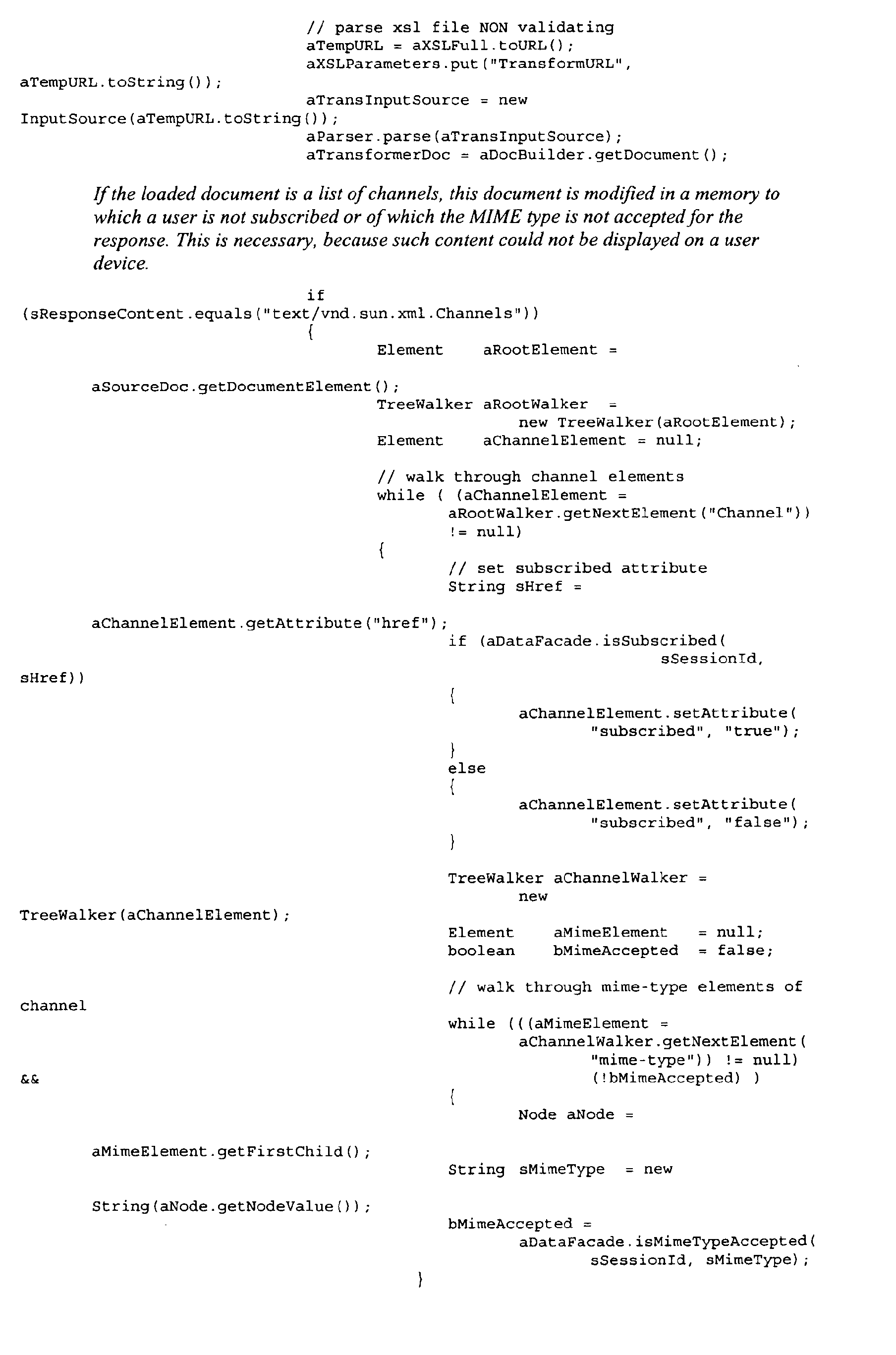

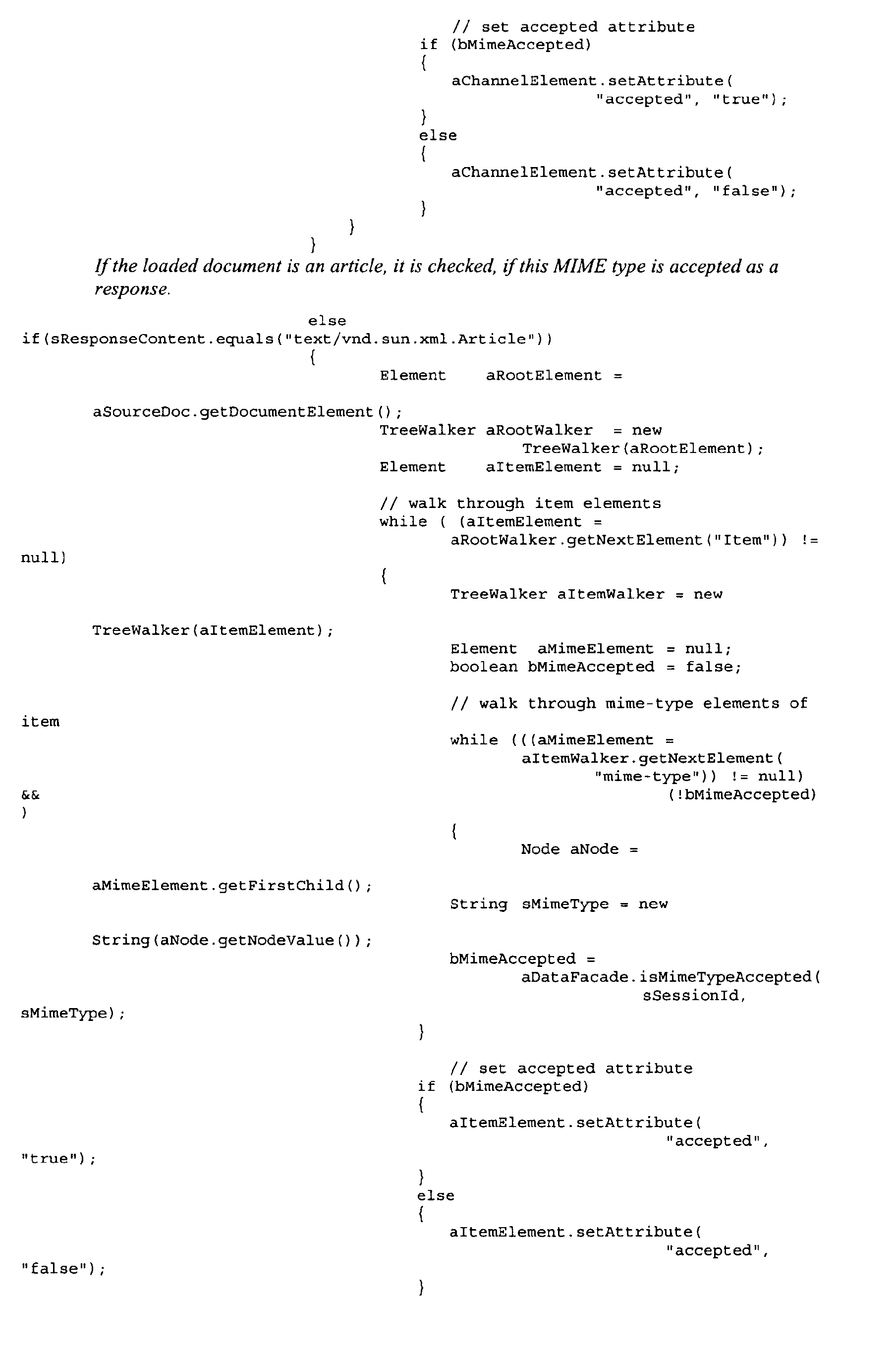

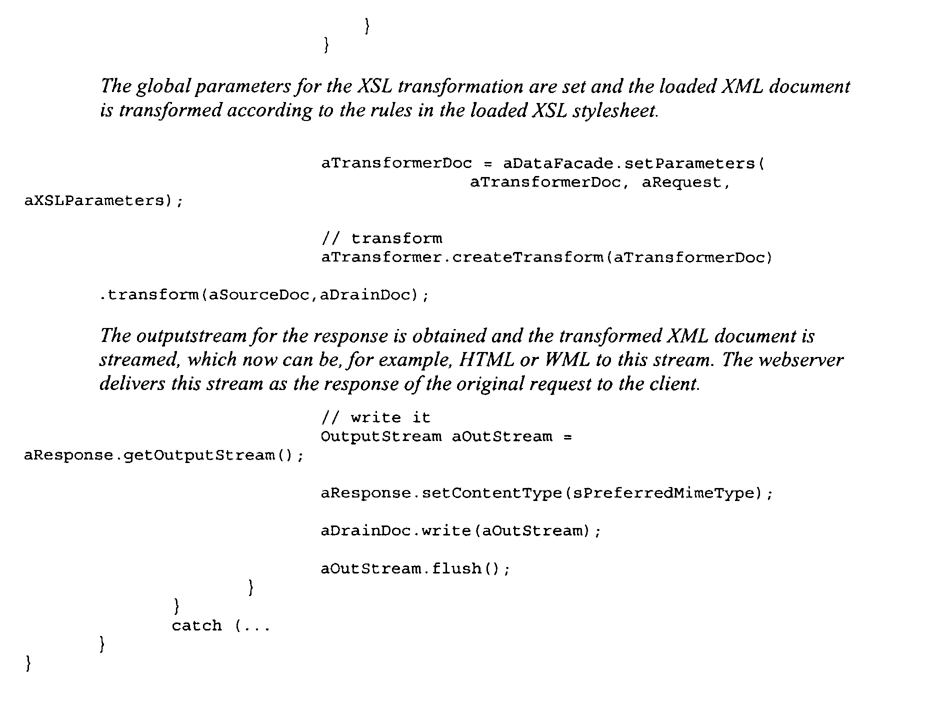

## Claims

1. A method for presenting data on a user device with presentation requirements relating to the presentation of said data on said user device, comprising the following steps:
a) receiving a request from said user device for said data by data presentation management means,
b) identifying said presentation requirements of said user device to said data presentation management means,
c) selecting a presentation scheme for said data in accordance with said presentation requirements, so that said presentation scheme can be applied to said data to create presentable data to allow the presentation of said data on said user device.

2. A method according to claim 1, wherein step c) is carried out by said data presentation management means.

3. A method according to any of the preceding claims, comprising the following further step:
d) applying said presentation scheme to said data to create presentable data to allow the presentation of said data on said user device.

4. A method according to the claim 3, wherein step d) is carried out by said data presentation management means.

5. A method according to claim 4, wherein step d) is carried out by said user device.

6. A method according to any of claims 1 to 4, comprising the following step:
e) transmitting said presentable data to said user device to allow the presentation of said data on said user device.

7. A method according to any of the preceding claims, wherein said data are retrieved by said data presentation management means before the application of said selected presentation scheme.

8. A method for obtaining data by a user device having presentation requirements relating to the presentation of said data on said user device, comprising the following steps:
a) submitting a request by said user device to data presentation management means for obtaining said data from said data presentation management means, said request causing the identification of said presentation requirements of said user device to said data presentation management means, the selection of a presentation scheme for said data in accordance with said presentation requirements of said user device by said data presentation management means, said request further causing the application of said selected presentation scheme to said data to create presentable data, and
b) receiving in said user device said presentable data to allow the presentation of said data by said user device.

9. A method for obtaining data by a user device having presentation requirements relating to the presentation of said data on said user device, comprising the following steps:
a) submitting a request by said user device to data presentation management means for obtaining said data from said data presentation management means, said request causing the identification of said presentation requirements of said user device to said data presentation management means and the selection of a presentation scheme for said data in accordance with said presentation requirements of said user device by said data presentation management means,
b) receiving in said user device said selected presentation scheme for said data,
c) applying in said user device said selected presentation scheme on said data to create presentable data.

10. A method according to the preceding claim, wherein said user device receives said data via said data management presentation means.

11. A method according to any of the preceding claims, wherein said presentation requirements of said user device are determined based on information about said user device.

12. A method according to any of the preceding claims, wherein said data includes at least one function which may be utilized by means of said user device.

13. A method according to any of the preceding claims, wherein said user device is a computer system including at least a processor, a storage medium and an i-/o-interface.

14. A method according to any of the preceding claims, wherein said data is retrieved via at least one portlet.

15. A method according to the preceding claim, wherein representations of at least two of said portlets are arranged in tree-like organization on said user device.

16. A computer program for carrying out a method according to any of the preceding method claims on a computer system.

17. A data carrier for storing a computer program for carrying out a method according to any of the preceding method claims on a computer system.

18. A method for using a computer system for carrying out a method according to any of the preceding method claims.

19. A computer system comprising at least a processor, a memory and an i-/o-interface for representing data depending on presentation requirements of a user device relating to the presentation of said data on said user device, comprising data presentation management means, wherein said data presentation management means include:
a) a receiving module for receiving a request of said user device for said data,
b) an identifying module for identifying said presentation requirements of said user device, and
c) a selecting module for selecting a presentation scheme for said data in accordance with said presentation requirements.

20. A computer system according to the preceding claim, wherein said data presentation management means further include:
d) a retrieving module for retrieving said data.

21. A computer system according to any of the preceding computer system claims, wherein said data presentation management means further include:
e) an applying module for applying said selected presentation scheme to said data to create presentable data which may be presented by said user device.

22. A computer system according to any of the preceding computer system claims, wherein said data presentation management means further include:
f) a transmitting module for transmitting said presentable data to said user device to allow the presentation of said data on said user device.

23. A computer system according to any of the preceding computer system claims, wherein said computer system includes a webserver.

24. A computer system according to any of the preceding computer system claims, wherein said retrieving module for retrieving said data includes at least one portlet.

25. A computer system according to the preceding claim, wherein representations of at least two of said portlets are arranged in a tree-like organization.
